# EUROPÄISCHE PATENTANMELDUNG

(11) **EP 0 881 244 A2**
(43) Veröffentlichungstag der Anmeldung: **02.12.1998**
(21) Anmeldenummer: 98107666.4
(22) Anmeldetag: 28.04.1998
(51) Int. Cl.: C08G 18/48

(54) **Verfahren zur Herstellung von thermoplastischen Polyurethanen**

(30) Priorität: 27.05.1997 US 864032
(71) Anmelder: BASF AKTIENGESELLSCHAFT, 67056 Ludwigshafen (DE)
(72) Erfinder: Scholz, Günter, Dr., 49448 Lemfoerde (DE); Hackl, Christa, 49152 Bad Essen (DE); Bittner, Gerhard, Dr., 49356 Diepholz (DE); Reichel, Curtis John, 48195 Southgate, Michigan (US); Fishback, Thomas L., 48173 Gibraltar, Michigan (US); Aviles, Gladys, Dr., Canton, MI (US); Nietschke, Dieter, 49448 Quernheim (DE); Chlosta, Andreas, 49448 Lemförde (DE)

(57) **Zusammenfassung**

Die Erfindung betrifft Verfahren zur Herstellung von thermoplastischen Polyurethanen durch Umsetzung von (a) Isocyanaten mit (b) gegenüber Isocyanaten reaktiven Verbindungen mit einem Molekulargewicht von 500 bis 10000 g/mol, gegebenenfalls in Gegenwart von (c) Kettenverlängerungsmitteln mit einem Molekulargewicht von kleiner 500 g/mol, (d) Katalysatoren und/oder (e) üblichen Hilfs- und Zusatzstoffen, dadurch gekennzeichnet, daß man eine Komponente (b) enthaltend mindestens ein Polyetherpolyalkohol (b1) mit Polyoxypropylen- und Polyoxyethyleneinheiten, einem Molekulargewicht von 500 bis 10000 g/mol, einer Unsättigung von kleiner 0,07 meq/g und einem Gehalt an primären Hydroxylgruppen von 80 bis 100 % einsetzt.

## Beschreibung

Die Erfindung bezieht sich auf Verfahren zur Herstellung von thermoplastischen Polyurethanen durch Umsetzung von (a) Isocyanaten mit (b) gegenüber Isocyanaten reaktiven Verbindungen mit einem Molekulargewicht von 500 bis 10000 g/mol, gegebenenfalls in Gegenwart von (c) Kettenverlängerungsmitteln mit einem Molekulargewicht von kleiner 500 g/mol, (d) Katalysatoren und/oder (e) üblichen Hilfs- und Zusatzstoffen sowie die mit diesem Verfahren herstellbaren thermoplastischen Polyurethane. Des Weiteren betrifft die Erfindung Polyolkomponenten enthaltend mindestens einen Polyetheralkohol mit Polyoxypropylen- und Polyoxyethyleneinheiten und einem Molekulargewicht von 500 bis 10000 g/mol, einer Unsättigung von kleiner 0,07 meq/g und einem Gehalt an primären Hydroxylgruppen von 80 bis 100 % sowie Polytetrahydrofuran.

Thermoplastische Polyurethane, im Folgenden auch als TPU bezeichnet, sind teilkristalline Werkstoffe und gehören zu der Klasse der thermoplastischen Elastomere. Sie zeichnen sich durch eine Kombination von vorteilhaften Stoffeigenschaften wie beispielsweise einem geringen Abrieb, einer guten Chemikalienbeständigkeit sowie einer hohen Flexibilität bei gleichzeitig einer hohen Festigkeit mit den Vorteilen der kostengünstigen Thermoplastverarbeitung, die kontinuierlich oder diskontinuierlich nach verschiedenen bekannten Verfahren, beispielsweise dem Band- oder dem Extruderverfahren, durchgeführt werden kann, aus. Eine Übersicht über TPU, ihre Eigenschaften und Anwendungen wird z.B. im "Kunststoff-Handbuch", Band 7, Polyurethane, 3. Auflage, 1993, herausgegeben von G. Oertel, Carl Hanser Verlag, München gegeben.

Üblicherweise werden zur Herstellung von TPU Polytetrahydrofurane (PTHF) mit Molmassen von 500 bis 2000 g/mol als Polyetherpolyalkohole, im Folgenden auch als Polyole bezeichnet, eingesetzt. Die Verwendung von Polypropylenglykolen mit Molmassen von 1000 bis 4000 g/mol, denen terminal Ethylenoxid-Einheiten hinzugefügt wurden, um primäre Hydroxylgruppen zu erhalten, sind für die Herstellung von TPU beispielsweise in US 5 185 420 und WO 93/24549 beschrieben. Nachteilig wirkt sich bei den in diesen Schriften beispielhaft beschriebenen Polyetherpolyolen, die 70 bzw. 75,6 % primäre Hydroxylgruppen aufweisen, die mangelhafte Reaktivität gegenüber Isocyanaten aus, so daß bei einer Umsetzung im one-shot Verfahren eine unerwünscht hohe Katalysatorkonzentration benötigt wird.

Zudem weisen die mit diesen Polyolen hergestellten TPU im Vergleich zu den auf PTHF basierenden TPU erhebliche Nachteile in ihren mechanischen Eigenschaften auf.

Ziel der vorliegenden Erfindung war es somit, ein Verfahren zur Herstellung von thermoplastischen Polyurethanen mit einer verbesserten Reaktivität der Polyolkomponente zu entwickeln, wobei die nach dem Verfahren hergestellten TPU im Vergleich zu den bislang bekannten auf Polypropylenglykolen basierenden TPU zudem ein verbessertes mechanisches Eigenachaftsprofil aufweisen sollen.

Diese Aufgabe konnte dadurch gelöst werden, daß man bei der Herstellung von thermoplastischen Polyurethanen durch Umsetzung von (a) Isocyanaten mit (b) gegenüber Isocyanaten reaktiven Verbindungen mit einem Molekulargewicht von 500 bis 10000 g/mol, gegebenenfalls in Gegenwart von (c) Kettenverlängerungsmitteln mit einem Molekulargewicht von kleiner 500 g/mol, (d) Katalysatoren und/oder (e) üblichen Hilfs- und Zusatzstoffen eine Komponente (b) enthaltend mindestens ein Polyetherpolyalkohol (b1) mit Polyoxypropylen- und Polyoxyethyleneinheiten, einem Molekulargewicht von 500 bis 10000 g/mol, einer Unsättigung von kleiner 0,07 meq/g und einem Gehalt an primären Hydroxylgruppen von 80 bis 100 % einsetzt.

Die erfindungsgemäße Polyole der Komponente (b1) weisen eine Unsättigung von kleiner 0,07, bevorzugt 0,001 bis 0,05, besonders bevorzugt 0,001 bis 0,04, insbesondere 0,001 bis 0,01 meq/g auf. Die Unsättigung, die üblicherweise in meq pro g Polyetherpolyalkohol angegebenen wird, kann durch allgemein bekannte Verfahren, beispielsweise durch das bekannte Verfahren nach Kaufmann durch Bromierung der Doppelbindungen und anschließender Titration mit Jod, erfolgen. Die Einheit meq/g entspricht in der Regel dem Gehalt an Doppelbindungen in mmol pro g Polyetherpolyalkohol. Das Molekulargewicht der Polyole (b1) beträgt 500 bis 10000, bevorzugt 1000 bis 5000, besonders bevorzugt 1000 bis 2750 g/mol.

Die Hydroxylzahl der Polyole (b1) beträgt in der Regel zwischen 10 und 230 mg KOH/g. Bevorzugt weisen die Polyole eine Hydroxylzahl von 52 bis 110, besonders bevorzugt 60 bis 100 mg KOH/g auf. Die Funktionalität der Polyole ist abhängig von der Unsättigung der Polyole und der Funktionalität der Startermoleküle. Für die Herstellung von thermoplastischen Polyurethanen beträgt die Funktionalität vorzugsweise 1,9 bis 3,0, besonders bevorzugt 1,95 bis 2,8, insbesondere 1,95 bis 2,2, da eine höhere Funktionalität zu vernetzten Polyurethanen führt, die ein thermoplastisches Verarbeiten erschweren.

Die erfindungsgemäßen Polyole (b1) können beispielsweise nach allgemein üblichen Verfahren durch Alkoxylierung von Startersubstanzen, die bevorzugt eine Funktionalität von 2 aufweisen, mit Alkylenoxiden in Gegenwart von beispielsweise basischen Salzen des Cäsiums, z.B. Cäsiumhydroxyd, und/oder basischen Salzen und/oder Hydroxiden von Erdalkalimetallen als Katalysatoren hergestellt werden. Bevorzugt können als Katalysatoren bei der Alkoxylierung Cäsiumhydroxyd und/oder Calciumhydroxyd eingesetzt werden.

Als Startersubstanzen können bevorzugt difunktionelle Substanzen wie beispielsweise Ethylenglykol, Diethylenglykol, Propylenglykol, Dipropylenglykol, Diole des Butans, beispielsweise Butan-1,4-diol, Polyoxyethylen- und/oder bevorzugt Polyoxypropylenglykole mit üblichen Molekulargewichten von kleiner 500 g/mol verwendet werden. Höherfunktionelle Startersubstanzen wie beispielsweise Glycerin und/oder Trimethylolpropan können als Startersubstanzen eingesetzt werden, wobei die Funktionalität der hergestellten erfindungsgemäßen Polyole (b1) bevorzugt in dem angegebenen Bereich liegen sollte.

Die erfindungsgemäßen Polyole (b1) enthalten sowohl Polyoxyethylen- als auch Polyoxypropyleneinheiten. Eine bevorzugte Ausführungsform kann beispielsweise durch ausreichende Zugabe von Propylenoxid zu den Startersubstanzen erfolgen, womit ein Block mit einem Molekulargewicht von vorzugsweise mindestens 700 g/mol, besonders bevorzugt mindestens 900 g/mol aus Polyoxypropyleneinheiten synthetisiert wird. Dieser bevorzugte Block aus Polyoxypropyleneinheiten kann sowohl direkt an die Startersubstanzen angelagert werden, oder alternativ an bereits an die Startersubstanzen angelagerte Alkylenoxide. Beispielsweise können die Startersubstanzen erst mit weiteren Alkylenoxiden, beispielsweise Butylenoxid und/oder bevorzugt Ethylenoxid und anschließend wie beschrieben mit Propylenoxid, oder aber erst mit Propylenoxid und anschließend mit weiteren Alkylenoxiden, beispielsweise Butylenoxid und/oder bevorzugt Ethylenoxid alkoxyliert werden. Bevorzugt wird aber der Polyoxypropylehblock direkt an die Startersubstanzen angelagert. Des Weiteren können die Startersubstanzen mit weiteren Alkylenoxide, beispielsweise Butylenoxid und/oder bevorzugt Etyhlenoxid zusammen mit Propylenoxid alkoxyliert werden.

Bevorzugt ist der Einsatz von Polyolen, die Polyoxyethylengruppen in einem Gewichtsanteil von 5 bis 30, besonders bevorzugt 15 bis 25, insbesondere 15 bis 22 Gew.-%, bezogen auf das Gewicht der gesamten Polyoxyalkylengruppen, enthalten.

Bevorzugt können die Polyole zum Abschluß mit Ethylenoxid alkoxyliert werden, wodurch die Polyole (b1) terminale Polyoxyethylengruppen aufweisen. Besonders bevorzugt sind Blockpolymere, bei denen an die Startersubstanz zuerst Propylenoxid und anschließend in einer zweiten Stufe Ethylenoxid synthetisiert wurde. Der Anteil an terminalen Polyoxyethyleneinheiten beträgt bei den erfindungsgemäßen Polyolen (b1) vorzugsweise 5 bis 30 Gew.-%, besonders bevorzugt 15 bis 25 Gew.-%, bezogen auf das Gewicht der gesamten Polyoxyalkylengruppen. Der Anteil an primären Hydroxylgruppen beträgt bei den Polyolen (b1) erfindungsgemäß 80 bis 100 %, vorzugsweise 82 bis 95 %.

Die Herstellung von erfindungsgemäßen Polyolen (b1) soll anhand der folgenden Ausführungen beispielhaft beschrieben werden:

Die Startersubstanzen und die Katalysatoren kann man, vorzugsweise nach dem Entfernen von eventuell anwesendem Wasser bei erhöhter Temperatur und vermindertem Druck, in einem üblichen Reaktor oder Autoklaven, beispielsweise einem Rührkesselreaktor oder Rohrreaktoren mit üblichen Einrichtungen zur Kühlung des Reaktionsgemisches, mit dem Propylenoxid und gegebenenfalls weiteren Alkylenoxiden umsetzen. Üblicherweise wird der Katalysator in einer Menge von 0 bis 10 ppm, bezogen auf die Gesamtrezeptur, in dem Reaktionsgemisch eingesetzt. Die Alkoxylierung wird vorzugsweise bei einer Temperatur des Reaktionsgemisches innerhalb eines Bereiches von 70°C bis 150°C, besonders bevorzugt 80°C bis 105°C, durchgeführt. Die Reaktion führt man bei allgemein bekannten Drücken durch. Die Alkylenoxide können in der Regel über eine Zeit von 4 bis 20 Stunden zu dem Reaktionsgemisch zugegeben werden, je nach dem gewünschten Molekulargewicht des Polyols. Vorzugsweise kann Propylenoxid zu Beginn der Umsetzung so zugesetzt werden, daß wie beschrieben ein Block von Polyoxypropyleneinheiten mit einem Molekulargewicht von mindestens 700 g/mol an die Startersubstanzen angelagert wird. Die Reaktionszeit kann 1 bis 8 Stunden betragen, wobei vorzugsweise eine vollständige Umsetzung der Alkylenoxide gewährleistet werden kann. Nach vollständigem Umsatz des beispielsweise Propylenoxides und gegebenenfalls weiteren Alkylenoxiden können anschließend besonders bevorzugt an das Polyol terminal durch Zugabe von Ethylenoxid Polyoxyethyleneinheiten angelagert werden. Anschließend wird das Reaktionsgemisch in der Regel abgekühlt, vorzugsweise unter vermindertem Druck und in bekannter Weise aufgearbeitet. Beispielsweise kann der Cäsiumkatalysator durch Adsorption an z.B. Silikate und anschließender Filtration aus dem Polyol entfernt werden. Alternativ können die basischen Katalysatorsalze, beispielsweise die genannten Hydroxyde neutralisiert, z.B. durch eine geeignete Säure wie beispielsweise Phosphorsäure, und in dem Polyol belassen werden. Den Polyole können anschließend bekannte Stabilisierungsmittel, z.B. gegen Oxidation, zugegeben werden.

Zusätzlich zu der erfindungsgemäßen Polyolkomponente (b1) können gegebenenfalls weitere gegenüber Isocyanate reaktive Verbindungen, beispielsweise Polyetherpolyole und/oder Polyesterpolyole, die eine übliche Unsättigung von größer 0,07 meq/g aufweisen können, und/oder beispielsweise PTHF eingesetzt werden. Vorzugsweise beträgt der Gewichtsanteil der erfindungsgemäßen Polyole bezogen auf das Gewicht der insgesamt bei der Herstellung der TPU eingesetzten gegenüber Isocyanaten reaktiven Verbindungen, d.h. der Summe der Komponenten (b) und (c), mindestens 0,1, bevorzugt 0,1 bis 90, besonders bevorzugt 30 bis 90, insbesondere 40 bis 80 Gew.-%. Bevorzugt wird eine Polyolkomponente (b) eingesetzt, die PTHF sowie die erfindungsgemäßen Polyole (b1) enthält. Besonders bevorzugt ist eine Polyolkomponente, enthaltend 30 bis 90, insbesondere 40 bis 80 Gew.-% Polyetherpolyalkohol mit einem Molekulargewicht von 500 bis 10000 g/mol, einer Unsättigung von kleiner 0,07 meq/g und 80 bis 100 % primären Hydroxylgruppen sowie 10 bis 70, insbesondere 20 bis 60 Gew.-% Polytetrahydrofuran.

Die bei der Herstellung der TPU üblicherweise verwendeten Komponenten (a), (b) sowie gegebenenfalls (c), (d) und/oder (e) sollen im Folgenden beispielhaft beschrieben werden:
a) Als organische Isocyanate (a) kommen vorzugsweise aliphatische, cycloaliphatische und insbesondere aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethylbutylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4-Cyclohexandiisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4'-Toluylen-diisocyanat, Gemische aus 2,4- und 2,6-Toluylen-diisocyanat, 4,4'-, 2,4'- und 2,2'-Diphenylmethan-diisocyanat (MDI), Gemische aus 2,4'- und 4,4'-Diphenylmethan-diisocyanat, urethanmodifizierte flüssige 4,4'- und/oder 2,4-Diphenylmethan-diisocyanate, 4,4'-Diisocyanatodiphenylethan- (1,2) und 1,5-Naphthylen-diisocyanat. Vorzugsweise verwendet werden Hexamethylen-diisocyanat-1,6, 4,4'-Dicyclohexylmethan-diisocyanat, Isophoron-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.
b) Zusätzlich zu den vorstehend beschriebenen erfindungsgemäßen Polyolen (b1) können als gegenüber Isocyanaten reaktive Substanzen (b) beispielsweise Polyhydroxylverbindungen mit Molekulargewichten von 500 bis 10000, vorzugsweise Polyetherole und Polyesterole eingesetzt werden. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol,1,6, hergestellt durch Umesterung, mit den oben genannten Molekulargewichten. Die genannten Polyhydroxylverbindungen können als Einzelkomponenten oder in Form von Mischungen zusätzlich zu den erfindungsgemäßen Polyolen zur Anwendung kommen. Diese zusätzlich zu den erfindungsgemäßen Polyolen gegebenenfalls einzusetzenden Polyole werden beispielhaft nachfolgend beschrieben.
   Die Mischungen zur Herstellung der TPU bzw. die TPU müssen zumindest überwiegend auf difunktionellen gegenüber Isocyanaten reaktiven Substanzen basieren. Die mit diesen Mischungen hergestellten TPU sind somit vorwiegend unverzweigt, d.h. überwiegend nicht vernetzt, aufgebaut.
   Geeignete Polyetherole, die gegebenenfalls zusätzlich zu den Polyolen (b1) eingesetzt werden können, können hergestellt werden nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 reaktive Wasserstoffatome gebunden enthält. Als Alkylenoxide seien z.B. genannt: Ethylenoxid, 1,2-Propylenoxid, Tetrahydrofuran, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-dialkanolamine, beispielsweise N-Methyl-diethanolamin und Diole, z.B. Alkandiole oder Dialkylenglykole mit 2 bis 12 C,Atomen, vorzugsweise 2 bis 6 C-Atomen, wie Ethandiol, Propandiol-1,3, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole). Vorzugsweise verwendet werden gegebenenfalls zusätzlich zu den erfindungsgemäßen Polyetherpolyalkoholen (b1) Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylen-glykole. Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.
   Die im Falle der TPU im wesentlichen linearen Polyetherole besitzen übliche Molekulargewichte von 500 bis 10000, vorzugsweise 600 bis 6000 und insbesondere 800 bis 3500. Sie können sowohl einzeln als auch in Form von Mischungen untereinander zusätzlich zu den erfindungsgemäßen Polyolen zur Anwendung kommen.
   Geeignete Polyesterole, die gegebenenfalls zusätzlich zu den Polyolen (b1) eingesetzt werden können, können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimethylpropandiol-1,3, Propandiol-1,2 und Dialkylenether-glykole wie Diethylenglykol und Dipropylenglykol. Je nach den gewünschten Eigenschaften können die mehrwertigen Alkohole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise (ω-Hydroxycapronsäure und vorzugsweise Polymerisationsprodukte von Lactonen, beispielsweise gegebenenfalls substituierten ω-Caprolactonen.
   Als Polyesterole vorzugsweise verwendet werden Alkandiolpolyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol- 1,4-butandiol-polyadipate.
   Die Polyesterole besitzen vorzugsweise Molekulargewichte von 500 bis 6000, vorzugsweise von 800 bis 3500.
c) Als Kettenverlängerungsmittel (c), die üblicherweise Molekulargewichte von kleiner 500 g/mol, vorzugsweise 60 bis 300 aufweisen, kommen vorzugsweise Alkandiole mit 2 bis 12 Kohlenstoffatomen, vorzugsweise mit 2,4 oder 6 Kohlenstoffatomen, wie z.B. Ethandiol, Hexandiol-1,6, und insbesondere Butandiol-1,4 und Dialkylenetherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephthalsäure-bis-ethandiol oder -butandiol-1,4, Hydroxyalkylenether des Nydrochinons, wie z.B. 1,4-Di-(β-hydroxyethyl)-hydrochinon, (cyclo)aliphatische Diamine, wie z.B. 4,4'-Diaminodicyclohexylmethan, 3,3'-Dimethyl-4,4'-diaminodicyclohexylmethan, 1-Amino- 3,3,5-trimethyl-5-aminomethyl-cyclohexan, Ethylendiamin, 1,2-, 1,3-Propylen-diamin, N-Methyl-propylendiamin-1,3, N,N'-Dimethylethylendiamin und aromatische Diamine, wie z.B 2,4- und 2,6-Toluylen-diamin, 3,5-Diethyl-2,4- und -2,6-toluylen-diamin und primäre, ortho-di-, -tri- und/oder -tetraalkylsubstituierte 4,4'-Diamino-diphenylmethane.
   Als Kettenverlängerungsmittel finden vorzugsweise Verwendung Alkandiole mit 2 bis 6 C-Atomen im Alkylenrest, insbesondere Butandiol-1,4 und/oder Dialkylenglykole mit 4 bis 8 Kohlenstoffatomen.
   Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 6,4, wobei die Härte und der Schmelzpunkt der TPU mit zunehmendem Gehalt an Diolen ansteigt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,002 bis 0,1 Teilen pro 100 Teile Polyhydroxylverbindung (b) eingesetzt.
e) Neben Katalysatoren können den Aufbaukomponenten (a) bis (c) auch übliche Hilfsmittel und/oder Zusatzstoffe (e) hinzugefügt werden. Genannt seien beispielsweise oberflächenaktive Substanzen, Schaumstabilisatoren, Zellregler, Füllstoffe, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, Farbstoffe, anorganische und/oder organische Füllstoffe, Verstärkungsmittel und Weichmacher.

Nähere Angaben über die oben genannten Hilfsmittel- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem vorgenannten Kunststoff-Handbuch, Band XII, Polyurethane oder der DE-OS 29 01 774 zu entnehmen. Die Herstellung der thermoplastischen Elastomere kann nach den bekannten Verfahren im one-shot Verfahren kontinuierlich auf Bandanlagen oder mit Reaktionsextrudern sowie diskontinuierlich im Gießverfahren als auch nach dem bekannten Prepolymerprozeß erfolgen. Bei diesen Verfahren können die zur Reaktion kommenden Komponenten (a), (b) und gegebenenfalls (c) nacheinander oder gleichzeitig miteinander vermischt werden, wobei die Reaktion unmittelbar einsetzt.

Bevorzugt wird die Umsetzung im one-shot Verfahren durchgeführt.

Die Reaktionspartner (a), (b) und gegebenenfalls (c) können bevorzugt in einem solchen Verhältnis eingesetzt werden, daß das Verhältnis der NCO-Gruppen der Komponente (a) zur Summe aller mit den NCO-Gruppen reagierenden Wasserstoffatome der Komponenten (b) und gegebenenfalls (c) 1 : 0,9 bis 1 : 1,2, besonders bevorzugt 1 : 0,95 bis 1 : 1,1, insbesondere 1 : 1 beträgt. Die Reaktion ist exotherm und verläuft üblicherweise rasch.

Wie bereits dargelegt wurde, kann das Reaktionsgemisch enthaltend (a), (b) und gegebenenfalls (c), (d) und/oder (e) nach dem Extruderverfahren oder vorzugsweise nach dem Bandverfahren umgesetzt werden. Im einzelnen wird beim Bandverfahren auf folgende Weise verfahren:

Die Aufbaukomponenten (a) bis (c) sowie gegebenenfalls (d) und/oder (e) werden bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise Förderband, aufgebracht und durch eine temperierte Zone geführt. Die Reaktionstemperatur in der temperierten Zone kann 60 bis 200°C, vorzugsweise 100 bis 180°C betragen und die Verweilzeit liegt im allgemeinen bei 0,05 bis 0,5 Stunden, vorzugsweise 0,1 bis 0,3 Stunden. Nach beendeter Reaktion läßt man das TPU abkühlen und zerkleinert oder granuliert es anschließend.

Beim Extruderverfahren werden die Aufbaukomponenten (a) bis (c) sowie gegebenenfalls (d) und (e) einzeln oder als Gemisch in den Extruder eingeführt, z.B. bei Temperaturen von 100 bis 250°C, vorzugsweise 140 bis 220°C zur Reaktion gebracht, das erhaltene TPU wird extrudiert, abgekühlt und granuliert.

Die Verarbeitung der TPU, die üblicherweise als Granulat oder in Pulverform vorliegen, erfolgt nach üblichen Verfahren. Beispielsweise mischt man die TPU z.B. bei Temperaturen von 0 bis 200°C, vorzugsweise 60 bis 150°C und insbesondere 80 bis 120°C. Anschließend kann man das Gemisch bei einer Temperatur im Bereich von 150 bis 250°C, vorzugsweise 160 bis 230°C und insbesondere 180 bis 220°C, im beispielsweise fließfähigen, erweichten oder geschmolzenen Zustand, vorzugsweise mit Entgasung, z.B. durch Rühren, Walzen, Knetern oder Extrudieren, beispielsweise unter Verwendung einer Walzvorrichtung, eines Kneters oder eines Extruders homogenisieren und zu den gewünschten TPU verarbeiten. Vorzugsweise werden die TPU in Mischungen oder einzeln in einen Extruder eingebracht, z.B. bei Temperaturen von 150 bis 250°C, vorzugsweise 160 bis 230°C und insbesondere von 180 bis 220°C, teilweise geschmolzen, die Mischung extrudiert, z.B. auf einer Ein- oder Zweiwellenmaschine, beispielsweise mit Entgasung, abgekühlt und anschließend granuliert. Die Granulate können zwischengelagert oder direkt zu den gewünschten Produkten weiterverarbeitet werden.

Die erfindungsgemäßen Vorteile sollen anhand der folgenden Beispiele dargestellt werden.

### Beispiel 1

Thermoplastisches Polyurethane wurden aus 700 Teilen MDI, 175 Teilen Butandiol als Kettenverlängerer (Hartsegmentanteil = 39 %) und 1000 Teilen eines Polyetherpolyols 1e oder 1v auf der Basis von Polyoxypropyleneinheiten und Polyoxyethyleneinheiten mit den in der Tabelle 1 dargestellten Charakteristika im bekannten one shot Verfahren hergestellt.

**Tabelle 1**

| Polyetherpolyalkohol | 1e | 1v |
|---|---|---|
| Molekulargewicht | 1250 | 2000 |
| Hydroxylzahl [mg KOH/g] | 90 | 50 |
| ungesättigte Anteile [meq/g] | 0,008 | 0,01 |
| Anteil primärer Hydroxylgruppen [%] | 85 | 75 |
| Gewichtsanteil an Polyoxyethyleneinheiten [%] | 20 | 27 |
| Funktionalität | 1,99 | 1,98 |

Die mit den Polyetherpolyolen 1e oder 1v hergestellten TPUs wiesen die in der Tabelle 2 dargestellten Eigenschaften auf.

**Tabelle 2**

| TPU-Probe | Shore | Dichte | Abrieb | Zugfestigkeit | Weiterreißfestigkeit | Reißdehnung |
|---|---|---|---|---|---|---|
| Polyetherpolyalkohol | Härte A | g/cm³ | mm³ | N/mm² | N/mm | % |
| 1e | 90 | 1,16 | 58 | 57 | 63 | 610 |
| 1v | 89 | 1,13 | 108 | 20 | 37 | 530 |

Die mit der erfindungsgemäßen Polyetherpolyalkoholkomponente 1e hergestellten TPU weisen im Vergleich zu den TPU auf der Basis von bekannten Polyetherpolyolen deutlich verbesserte Eigenschaften auf. Die Zugfestigkeit, die Weiterreißfestigkeit und die Reißdehnung sind bei den erfindungsgemäß hergestellten TPU deutlich erhöht, während der Abrieb vermindert werden konnte.

### Beispiel 2

Proben aus thermoplastischen Polyurethan mit Polymerdiolen, hergestellt aus 600 Teilen MDI, 140 Teilen Butandiol (Hartsegmentanteil = 30 %) und 1000 Teilen Polymerdiol im herkömmlichen one shot Verfahren, wobei die Diolkomponente ein Gemisch aus dem Polyetherpolyol 1e und und einem Polytetrahydrofuran-Diol (PTHF) mit einem Molekulargewicht von 1000 darstellt:

| Gewichtsverhältnis des Polyetherpolyols 1e: PTHF | Shore | Dichte | Abrieb | Zugfestigkeit | Weiterreißfestigkeit | Reißdehnung |
|---|---|---|---|---|---|---|
| | Härte A | g/cm³ | mm³ | N/mm² | N/mm | % |
| 100:0 | 84 | 1,15 | 86 | 38 | 45 | 610 |
| 90:10 | 83 | 1,15 | 90 | 42 | 50 | 710 |
| 80:20 | 84 | 1,145 | 97 | 41 | 48 | 720 |
| 70:30 | 84 | 1,14 | 81 | 41 | 48 | 740 |
| 60:40 | 84 | 1,14 | 78 | 46 | 46 | 720 |
| 50:50 | 84 | 1,135 | 61 | 44 | 50 | 710 |
| 40:60 | 85 | 1,13 | 54 | 53 | 51 | 670 |
| 30:70 | 85 | 1,13 | 52 | 56 | 52 | 650 |

Es wird erkennbar, daß thermoplastische Polyurethane, die mit den erfindungsgemäßen Mischungen hergestellt wurden, hervorragende Eigenschaften aufweisen.

### Beispiel 3

Proben aus thermoplastischem Polyurethan mit Polymerdiolen, hergestellt aus 600 Teilen MDI, 140 Teilen Butandiol (Hartsegmentanteil = 30 %) und 1000 Teilen Polymerdiol, wobei als Diolkomponente das erfindungsgemäße Polyetherpolyalkohol 1e oder das Vergleichspolyetherpolyalkohol 1v verwendet wurden, wurden auf ihre mechanischen Eigenschaften untersucht. Die Materialien wurden im herkömmlichen one shot Verfahren hergestellt, wobei die Temperatur in Abhängigkeit von der Zeit bei der Umsetzung aufgezeichnet wurde (Tabelle 4).

**Tabelle 4**

| Zeit/s | 10 | 20 | 30 | 40 | 50 | 60 | 70 | 80 | 90 | 100 | 110 |
|---|---|---|---|---|---|---|---|---|---|---|---|
| 1e [°C] | 74 | 81 | 87 | 94 | 100 | 106 | 113 | 119 | | | |
| 1v [°C] | 75 | 81 | 86 | 92 | 97 | 102 | 105 | 110 | 114 | 117 | 120 |

Der langsame Temperaturanstieg bei der Umsetzung des Vergleichspolyetherpolyalkohols zeigt deutlich, daß die Umsetzung mit der Komponente 1v unbefriedigend langsam verläuft. Dagegen zeigt der Verlauf der Reaktionstemperatur bei der Umsetzung mit der erfindungsgemäßen Komponente 1e eine gewünscht rasche Reaktion, die auf einen vollständigen Umsatz auch bei der Herstellung der TPU im one-shot Verfahren schließen läßt.

Die mechanischen Werte der TPU sind in Tabelle 5 dargestellt:

**Tabelle 5**

| TPU-Probe | Shore | Dichte | Abrieb | Zugfesttigkeit | Weiterreißfestigkeit | Reißdehnung |
|---|---|---|---|---|---|---|
| one shot | Härte A | g/cm³ | mm³ | N/mm² | N/mm | % |
| 3e | 85 | 1,15 | 83 | 39 | 45 | 620 |
| 3v | 85 | 1,14 | 192 | 20 | 36 | 810 |

Zudem weisen die TPU 3e, die mit dem erfindungsgemäßen Polyetherpolyalkohol 1e hergestellt wurden, erheblich verbesserte mechanische Eigenschaften auf. So sind beispielsweise der Abrieb, die Zugfestigkeit und die Weiterreißfestigkeit im Vergleich zu den TPU 3v, die mit dem Polyetherpolyalkohol 1v hergestellt wurden, deutlich verbessert.

## Patentansprüche

1. Verfahren zur Herstellung von thermoplastischen Polyurethanen durch Umsetzung von (a) Isocyanaten mit (b) gegenüber Isocyanaten reaktiven Verbindungen mit einem Molekulargewicht von 500 bis 10000 g/mol, gegebenenfalls in Gegenwart von (c) Kettenverlängerungsmitteln mit einem Molekulargewicht von kleiner 500 g/mol, (d) Katalysatoren und/oder (e) üblichen Hilfs- und Zusatzstoffen, dadurch gekennzeichnet, daß man eine Komponente (b) enthaltend mindestens einen Polyetherpolyalkohol (b1) mit Polyoxypropylen- und Polyoxyethyleneinheiten, einem Molekulargewicht von 500 bis 10000 g/mol, einer Unsättigung von kleiner 0,07 meq/g und einem Gehalt an primären Hydroxylgruppen von 80 bis 100 % einsetzt.

2. Verfahren nach Anspruch 1, dadurch gekennzeichnet, daß der Polyetherpolyalkohol (b1) Polyoxyethyleneinheiten in einem Gewichtsanteil von 5 bis 30 %, bezogen auf das Gewicht der gesamten Polyoxyalkylengruppen, enthält.

3. Verfahren nach einem der Ansprüche 1 oder 2, dadurch gekennzeichnet, daß die Komponente (b1) eine Hydroxylzahl von 10 bis 230 mg KOH/g aufweist.

4. Verfahren nach einem der Ansprüche 1 bis 3, dadurch gekennzeichnet, daß die Komponente (b1) eine Funktionalität von 1,9 bis 3,0 aufweist.

5. Verfahren nach einem der Ansprüche 1 bis 4, dadurch gekennzeichnet, daß die Polyolkomponente (b) zusätzlich zu den Polyetherpolyalkoholen (b1) Polytetrahydrofuran enthält.

6. Thermoplastische Polyurethane erhältlich durch ein Verfahren gemäß einem der Ansprüche 1 bis 5.

7. Polyolkomponente, enthaltend
30 bis 90 Gew.-% Polyetherpolyalkohol mit Polyoxypropylen- und Polyoxyethyleneinheiten und einem Molekulargewicht von 500 bis 10000 g/mol, einer Unsättigung von kleiner 0,07 meq/g und einem Gehalt an primären Hydroxylgruppen von 80 bis 100 % sowie
10 bis 70 Gew.-% Polytetrahydrofuran.

8. Verwendung von Polyetherpolyalkoholen mit Polyoxypropylen- und Polyoxyethyleneinheiten, einem Molekulargewicht von 500 bis 10000 g/mol, einer Unsättigung von kleiner 0,07 meq/g und einem Gehalt an primären Hydroxylgruppen von 80 bis 100 % zur Herstellung von thermoplastischen Polyurethanen.
